# FASCICULE DE BREVET EUROPEEN

(11) **EP 0 737 831 B1**
(45) Date de publication et mention de la délivrance du brevet: **02.05.2003**
(21) Numéro de dépôt: 96400759.5
(22) Date de dépôt: 09.04.1996
(51) Int. Cl.: F16K 37/00, G01L 5/00

(54) **Boîte à butées d'une vanne à obturateur**
Lagergehäuse eines Ventils
Bearing casing for a valve

(30) Priorité: 13.04.1995 FR 9504454
(43) Date de publication de la demande: 16.10.1996
(73) Titulaire: VELAN S.A., 69007 Lyon (FR)
(72) Inventeur: Mazel, Jean-Luc, 69340 Francheville (FR); Monier, Michel, 69780 Toussieu (FR)
(74) Mandataire: Fleurance, Raphael

(56) Documents cités:
- EP-A- 0 347 764
- WO-A-92/01212
- DE-A- 4 101 553
- FR-A- 2 586 777
- GB-A- 790 057
- US-A- 5 220 843

## Description

L'invention concerne une boîte à butées de vanne à obturateur, une vanne à obturateur pourvue d'une telle boîte à butée, et un procédé pour l'étalonnage d'une telle vanne.

Plus particulièrement l'invention concerne une boîte à butées d'une vanne à obturateur comprenant un corps de vanne, et une tige de commande de l'obturateur ayant une extrémité filetée débouchant dans la boite à butée, et une deuxième extrémité débouchant dans le corps de vanne et solidaire de l'obturateur localisé dans le corps de vanne.

La tige de commande est bloquée en rotation autour de son axe.

La boîte à butées comprenant un carter, un écrou-centreur localisé dans le carter et solidaire des moyens d'actionnement de la vanne, coopérant avec l'extrémité filetée de la tige de commande, et au moins deux butées à billes montées entre l'écrou-centreur et le carter, bloquant l'écrou-centreur par rapport au carter en translation suivant l'axe de la tige de commande.

Ainsi pour fermer la vanne on active les moyens d'actionnement de la vanne, ce qui met en rotation l'écrou-centreur qui, du fait de la liaison vis-écrou avec la tige de commande, entraîne en translation axiale ladite tige de commande, poussant l'obturateur dans son siège. On diminue ainsi la section passante entre l'amont et l'aval du corps de vanne. En mettant en rotation l'écrou-centreur dans le sens opposé au précédent, on ouvre la vanne.

Un défaut de fonctionnement de ces vannes à obturateur peut être catastrophique dans la mesure où elles sont souvent utilisées comme sécurité dans des canalisations industrielles, notamment dans les canalisations des centrales nucléaires. Ces vannes sont donc l'objet d'une maintenance fréquente pour s'assurer de leur bon fonctionnement.

Or la maintenance de ces vannes est lourde et nécessite pour leur démontage un temps d'arrêt de fonctionnement trop conséquent.

Il a donc été nécessaire de développer des dispositifs permettant de diagnostiquer, sans démontage conséquent de la vanne, si celle-ci sera, dans un proche avenir, sujette à un dysfonctionnement. Dans le cas où rien n'est décelé, la vanne ne sera pas démontée. Dans le cas où il est diagnostiqué un possible dysfonctionnement on effectue le changement des pièces défectueuses avant l'accident qui pourrait être relatif à ce dysfonctionnement.

Des paramètres importants permettant de faire ces diagnostiques ou cette maintenance prédictive sont les efforts en traction et en compression subis par la tige de commande lors des phases d'ouverture ou de fermeture de la vanne à obturateur.

Pour collecter ces informations il est utilisé des capteurs d'efforts de traction ou de compression.

On connaît des dispositifs où les capteurs sont rapportés sur l'arcade de la vanne. De tels montages ne permettent pas d'obtenir de valeur exploitable car les efforts captés sur l'arcade ne sont pas facilement corrélables avec des efforts existant effectivement sur la tige de commande.

Dans une autre variante de réalisation, ces capteurs sont rapportés sur la tige de commande au niveau de l'arcade de la vanne.

Cependant la vanne n'est pas adaptée pour pouvoir recevoir de tels capteurs rapportés qui se déplace avec les mouvements de la tige de commande et de ce fait en fonction de leur encombrement affecte les performances de la vanne, puisqu'ils peuvent constituer une butée pour la tige. Ce genre de dispositif capteur est alors souvent monté sur la tige pour une mesure d'effort qui ne correspond pas à une véritable situation de service puisque le mouvement de la tige est limité par la présence du capteur, et est ensuite démonté de la tige de commande lorsque la vanne est remise en service.

En outre dans les deux cas décrits précédemment, l'ergonomie de la vanne est affectée par la présence de câbles de connexion extérieurs, ce qui fragilise les dispositifs capteurs installés. Le document WO 9 201 212 montre une vanne dans laquelle est monté un capteur d'effort en série sur la ligne de transmission des efforts.

Un but de la présente invention est de pallier les inconvénients mentionnés ci-dessus en proposant des vannes dans lesquelles les capteurs sont intégrés dans la vanne afin qu'ils n'entravent pas le bon fonctionnement de la vanne tout en donnant la meilleure mesure possible.

Un autre but de la présente invention est de limiter de façon maximale la présence de câbles de connexion ballant librement autour des capteurs.

A cet effet l'invention concerne une boîte à butées d'une vanne à obturateur comprenant un corps de vanne, et une tige de commande de l'obturateur ayant une partie filetée débouchant dans la boite à butée, et une extrémité débouchant dans le corps de vanne et solidaire de l'obturateur localisé dans le corps de vanne, la tige de commande étant bloquée en rotation autour de son axe, ladite boîte à butées comprenant un carter, un écrou-centreur localisé dans le carter et solidaire du dispositif d'actionnement de la vanne, coopérant avec la partie filetée de la tige de commande, et au moins deux butées à billes montées entre l'écrou-centreur et le carter, bloquant l'écrou-centreur par rapport au carter en translation suivant l'axe de la tige de commande.

Selon l'invention la boîte à butées comprend en outre au moins un capteur intégré d'effort en traction et/ou en compression pour capter les efforts de la tige de commande lors respectivement des phases d'ouverture et/ou de fermeture de la vanne à obturateur en fonctionnement de service.

Le capteur intégré d'effort est monté entre une butée à billes et le carter.

Avantageusement un capteur intégré d'effort est monté entre chaque butée à billes et le carter.

Avantageusement la boîte à butées comprend en outre un capteur intégré du couple appliqué sur la vanne à obturateur lors des phases d'ouverture et/ou de fermeture de la vanne à obturateur en fonctionnement de service.

Pour éviter tout moyens de connexion ballants, les capteurs sont reliés à des prises de mesure extérieures par l'intermédiaire de moyens de connexion, et la boîte à butées comprend des moyens de rangement pour la protection et l'agencement des moyens de connexion dans le carter.

Dans un mode de réalisation de l'invention, le capteur intégré d'effort en traction et/ou en compression comprend deux couronnes concentriques de même axe que la tige de commande, reliée entre elles par des bras de mesure radiaux sur lesquels sont montées des jauges de contrainte ou équivalent, l'une des couronnes portant sur un épaulement annulaire du carter, l'autre des couronnes portant sur la butée à billes.

Dans un mode de réalisation de l'invention le capteur intégré de couple comprend deux couronnes concentriques de même axe que la tige de commande, reliée entre elles par un anneau de mesure sur lequel sont montées des jauges de contrainte ou équivalent, l'une des couronnes étant solidaire du carter, l'autre des couronnes étant solidaire d'une partie fixe des moyens d'actionnement de la vanne.

Selon une autre caractéristique de l'invention, chaque prise de mesure est localisée sur le carter en regard d'un capteur, les moyens pour la protection et l'agencement des moyens de connexion comprenant des gaines rigides ou équivalent, solidaires des prises de mesure, entourant les moyens de connexion entre les prises de mesure et les capteurs.

L'invention concerne aussi une vanne à obturateur comprenant un corps de vanne, une boîte à butée, et une tige de commande de l'obturateur ayant une extrémité filetée débouchant dans la boite à butée, et une deuxième extrémité débouchant dans le corps de vanne et solidaire de l'obturateur localisé dans le corps de vanne, la tige de commande étant bloquée en rotation autour de son axe, selon l'invention cette vanne à obturateur comprend une boîte à butée telle que décrite ci-dessus.

Les moyens d'actionnement de la vanne peuvent être un servomoteur.

En fonctionnement de service de la vanne, les capteurs d'effort et de couple sont connectés en continu à un dispositif d'acquisition de mesure à période d'échantillonnage variable.

En outre les capteurs d'effort et de couple sont connectés à un dispositif de pilotage ou d'asservissement en position de la tige de commande de la vanne.

Enfin l'invention concerne un procédé d'étalonnage de capteurs d'effort dans une vanne à obturateur telle que décrite ci-dessus.

Selon ce procédé :
- on lie la tige de commande de la vanne en translation axiale avec les moyens d'actionnement par l'intermédiaire d'un élément de tige pourvu d'un capteur d'effort de référence;
- on actionne les moyens d'actionnement de la vanne en ouverture ou en fermeture;
- on étalonne les capteurs d'effort intégrés par comparaison avec l'effort mesuré sur le capteur de référence monté sur l'élément de tige;
- on libère en translation axiale la tige de commande de la vanne des moyens d'actionnement.

Un premier avantage de la présente invention est de proposer des capteurs intégrés de manière que la mesure des efforts sur la tige puisse être effectuée en continu pendant le fonctionnement de service de la vanne et sans en affecter les performances.

Un autre avantage de la présente invention est d'avoir localisé les capteurs intégrés dans la boîte à butée. En effet cela permet, par un simple changement de boîte à butées, d'équiper des vannes à obturateur déjà en service avec des boîtes à butées ayant des capteurs intégrés en vu de leur surveillance en continu.

Un autre avantage de la présente invention résulte de la possible utilisation des données recueillies pour le pilotage de la vanne.

D'autres avantages et caractéristiques de la présente invention résulteront de la description qui va suivre en référence aux dessins annexés dans lesquels :
- la figure 1 est une représentation schématique en coupe d'un mode de réalisation d'une boîte à butée et d'une vanne selon l'invention.
- la figure 2 est une représentation schématique d'une mise en oeuvre possible du procédé d'étalonnage selon l'invention.
- la figure 3 est une représentation schématique d'une autre mise en oeuvre possible du procédé d'étalonnage selon l'invention.

L'invention concerne une boîte à butées 7 d'une vanne 1 à obturateur 6.

La vanne 1 comprend de façon connue, un corps de vanne 2, sur lequel est montée une arcade 50 dont l'extrémité opposée au corps de vanne constitue la base de la boîte à butées 7. La vanne comprend en outre une tige 3 de commande de l'obturateur 6, traversant l'arcade 50, ayant une partie filetée 4, et une extrémité 5 débouchant dans le corps de vanne 2 et solidaire de l'obturateur 6 localisé dans le corps de vanne 2.

La tige de commande 3 est bloquée en rotation autour de son axe 11 par un dispositif 51 connu.

La boîte à butées 7 comprenant un carter 8, un écrou-centreur 9 localisé dans le carter 8 et solidaire des moyens d'actionnement 21 de la vanne 1.

Dans le carter 8, L'écrou-centreur 9 est bloqué en translation suivant l'axe 11 de la tige de commande 3, par au moins deux butées à billes 10 montées entre l'écrou-centreur 9 et le carter 8. Ces butées à billes bloquent donc la translation de l'écrou-centreur 9 suivant l'axe 11 de la tige de commande 3 tout en permettant la rotation de l'écrou-centreur 9 autour de l'axe 11 de la tige de commande 3.

L'écrou-centreur 9 coopère avec la partie filetée 4 de la tige de commande 3. Ainsi, en activant les moyens d'actionnement 21 de la vanne, on met en rotation l'écrou-centreur 9, qui lui même imprime un mouvement de translation à la tige de commande 3 suivant son axe 11, permettant l'ouverture ou la fermeture de la vanne.

Selon une caractéristique de l'invention, la boîte à butées 7 comprend au moins un capteur 12 intégré d'effort en traction et/ou en compression pour capter les efforts de la tige de commande 3 lors respectivement des phases d'ouverture et/ou de fermeture de la vanne 1 à obturateur 6 en fonctionnement de service, c'est à dire lorsque les moyens d'actionnement 21 de la vanne sont actionnés.

Ces capteurs sont avantageusement localisés entre une partie du carter et un élément subissant des contraintes équivalentes à celles subies par la tige de commande 3.

Tous les capteurs de pression connus peuvent alors être utilisés, notamment les capteurs électromécaniques, mécano-optiques, optiques.

Les capteurs peuvent par exemple être constitués par les butées à billes, les billes subissant des contraintes suivant l'axe 11 de la tige de commande 3 équivalente à celles subies par la tige de commande 3.

Dans une forme de réalisation, les capteurs intégrés d'effort 12 peuvent être montés entre les parties fixes des butées à billes 10 et le carter 8.

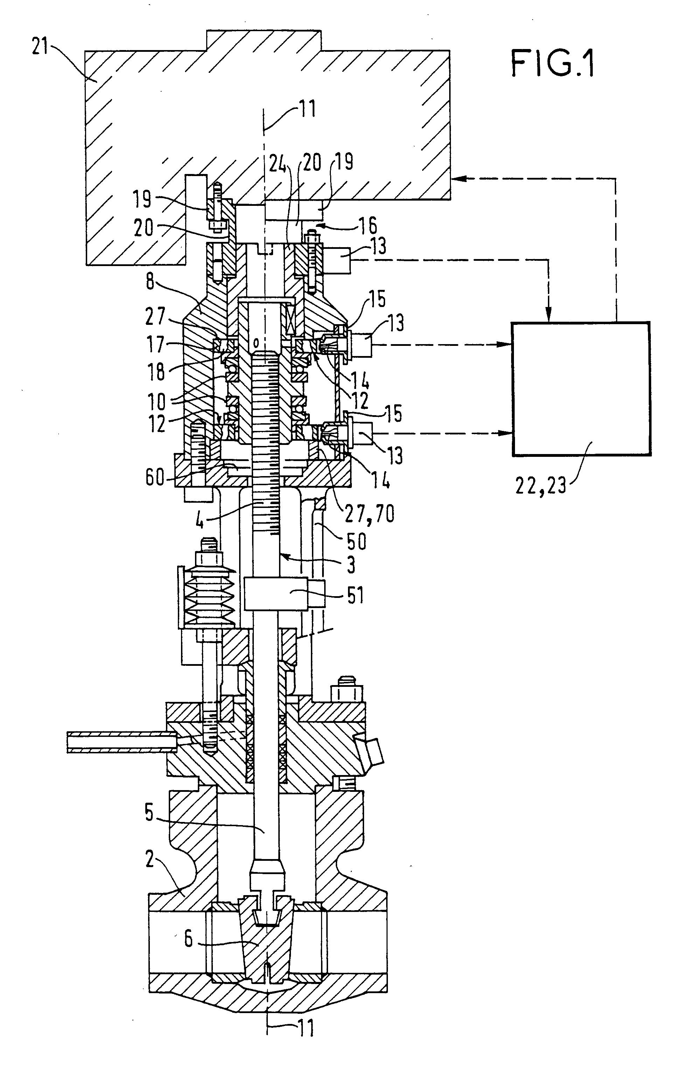

Dans le mode de réalisation représenté, à titre d'exemple non limitatif, sur la figure 1, les capteurs intégrés d'effort 12 en traction et/ou en compression comprennent chacun deux couronnes concentriques 17 de même axe 11 que la tige de commande 3, reliée entre elles par des bras de mesure radiaux 18 sur lesquels sont montées des jauges de contrainte ou équivalent, l'une des couronnes 17 portant sur un épaulement annulaire 27 du carter 8, l'autre des couronnes portant sur la butée à billes 10.

Avantageusement un élément annulaire de centrage 25 peut être intercalé entre la butée à billes 10 et la couronne 17 associée de manière à éviter que la butée à billes 10 ne porte sur les deux couronnes 17.

En outre la boîte à butées selon l'invention peut comprendre un capteur intégré 16 de couple appliqué sur la vanne 1 à obturateur 6 lors des phases d'ouverture et/ou de fermeture de la vanne 1 à obturateur 6 en fonctionnement de service. Tout type de capteur de couple connu peut être utilisé dans la mesure où il s'intègre sur la vanne sans pénaliser les performances de cette dernière.

Dans le mode de réalisation représenté sur la figure 1 à titre d'exemple illustratif non limitatif, le capteur intégré 16 de couple comprend deux couronnes concentriques 19 de même axe 11 que la tige de commande 3, reliée entre elles par un anneau de mesure 20 sur lequel sont montées des jauges de contrainte ou équivalent, l'une des couronnes 19 étant solidaire du carter 8, l'autre des couronnes 19 étant solidaire d'une partie fixe des moyens d'actionnement 21 de la vanne 1.

Les capteurs sont reliés à des prises de mesure extérieures 13 par l'intermédiaire de moyens de connexion 14.

Une des caractéristiques importantes de la présente invention résulte de la présence de moyens 15 pour la protection et l'agencement des moyens de connexion 14 dans le carter 8 entre les capteurs 12, 16, et les prises de mesure 13.

En effet à l'intérieur de la boîte à butées 7 l'écrou-centreur 9 est animé d'un mouvement de rotation lors des phases d'ouverture ou de fermeture, il est donc important de protéger les moyens de connexion 14 des dégâts qui pourraient résulter de leur frottement sur l'écrou-centreur 9, voire de leur entraînement avec l'écrou-centreur 9.

Dans le mode de réalisation représenté sur la figure 1, chaque prise de mesure 13 est localisée sur le carter 8 en regard d'un capteur 12, les moyens 15 pour la protection et l'agencement des moyens de connexion 14 comprennent des gaines ou capuchons rigides ou équivalent, solidaires des prises de mesure 13, entourant les moyens de connexion 14 entre les prises de mesure 13 et les capteurs 12.

Les moyens d'actionnement 21 de la vanne 1 à obturateur 6 sont avantageusement, de façon connue, un servomoteur.

En fonctionnement de service de la vanne 1, les capteurs d'effort 12 et de couple 16 peuvent être connectés en continu à un dispositif 22 d'acquisition de mesure à période d'échantillonnage variable, et d'exploitation des mesures obtenues.

En outre les capteurs 12, 16 peuvent être connectés à un dispositif 23 d'asservissement en position de la tige de commande de la vanne.

L'invention concerne aussi un procédé d'étalonnage des capteurs d'effort. En effet il est nécessaire de pouvoir étalonner les capteurs intégrés dans des conditions de service.

A cet effet :
- on lie la tige de commande de la vanne en translation axiale avec les moyens d'actionnement par l'intermédiaire d'un élément de tige pourvu d'un capteur d'effort de référence;
- on actionne les moyens d'actionnement de la vanne en ouverture ou en fermeture, générant des efforts en traction ou en compression a travers la tige de commande et l'élément de tige ;
- on étalonne les capteurs d'effort intégrés par comparaison avec l'effort mesuré sur le capteur de référence monté sur l'élément de tige;
- on libère en translation axiale la tige de commande de la vanne des moyens d'actionnement.

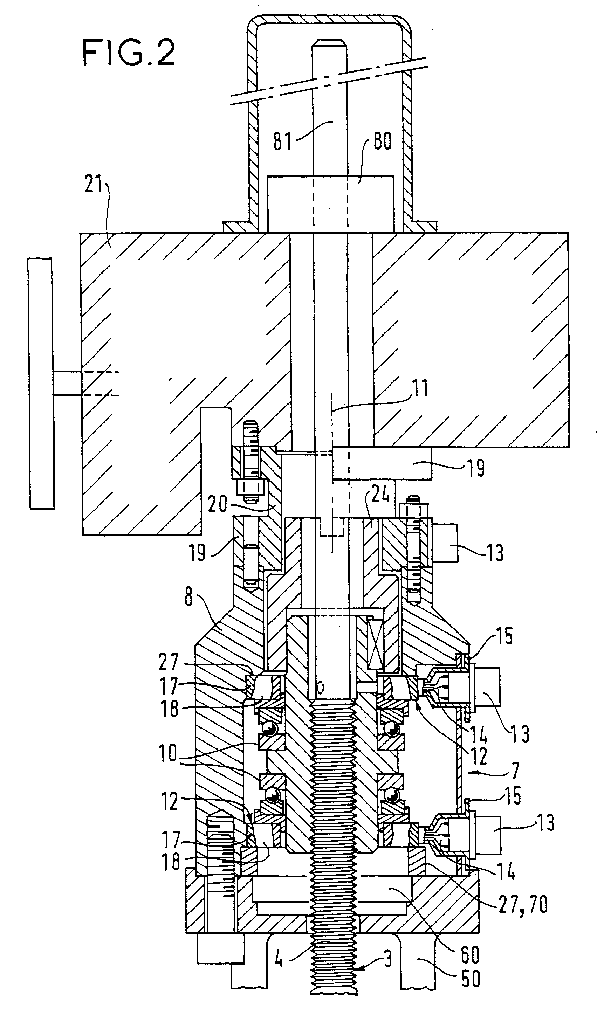

Dans la représentation de la figure 2, la tige de commande 3 traverse le servomoteur 21. L'élément de tige 81 est donc une partie de la tige de commande 3, le capteur de référence 80 étant rapporté sur la partie de la tige de commande 3 qui dépasse du servomoteur 21. Après l'étalonnage, le capteur rapporté 80 est démonté de la tige de commande 3.

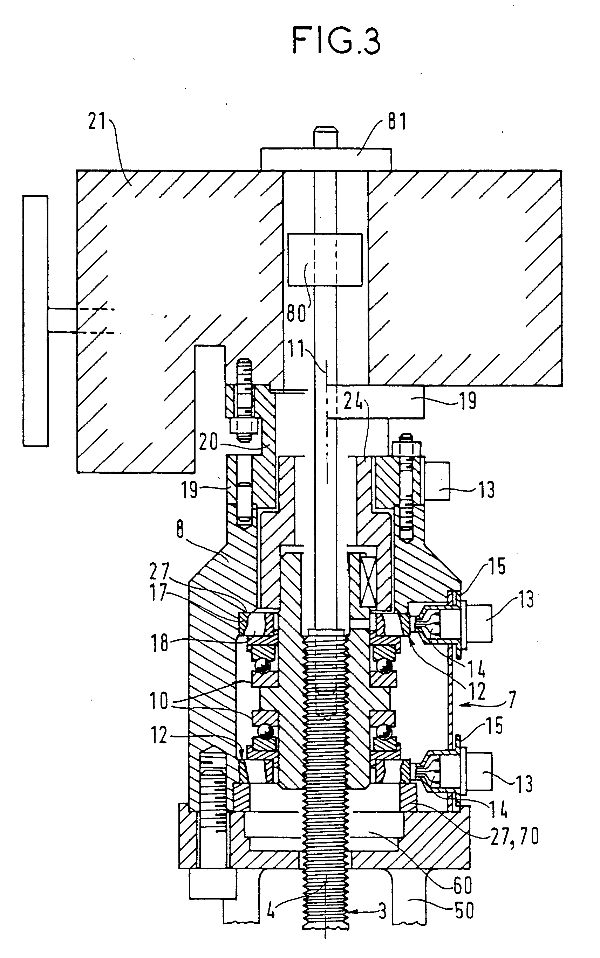

Dans la représentation de la figure 3, la tige de commande 3 ne dépasse pas du servomoteur 21. Il est donc utilisé un élément de tige 81 rapporté à l'extrémité de la tige de commande 3 et sur lequel est monté le capteur de référence 80. A l'issue de l'étalonnage, l'élément de tige 81 rapporté est démonté.

Un premier avantage de la présente invention est de proposer des capteurs intégrés de manière que la mesure des efforts sur la tige puisse être effectuée en continu pendant le fonctionnement de service de la vanne et sans en affecter les performances.

Un autre avantage de la présente invention est d'avoir localisé les capteurs intégrés dans la boîte à butée. En effet cela permet, par un simple changement de boîte à butées, d'équiper des vannes à obturateur déjà en service avec des boîtes à butées ayant des capteurs intégrés en vu de leur surveillance en continu.

C'est le cas dans le mode de réalisation représenté sur la figure 1. Notamment l'extrémité de l'arcade servant de base à la boîte à butées présente un façonnage central 60 destiné à accueillir une butée à billes de la boîte à butées originelle. Des cales d'adaptation 70 peuvent être éventuellement utilisée pour l'adaptation de la nouvelle boîte à butées sur l'arcade existante.

Un autre avantage de la présente invention résulte de la possible utilisation des données recueillies pour le pilotage de la vanne.

Un autre avantage résulte de la possibilité d'étalonner les capteurs sans démontage de la vanne ni même de la boîte à butée.

Un autre avantage résulte du fait que les mesures sont conventionnelles et peuvent donc être acquises et exploitées par des dispositifs d'acquisition et d'exploitation existants.

Bien entendu, l'invention n'est pas limitée au mode de réalisation décrit et représenté, mais elle est susceptible de nombreuses variantes accessibles à l'homme du métier sans que l'on s'écarte de l'invention. En particulier, on pourra, sans sortir du cadre de l'invention, remplacer tout moyen par un moyen équivalent.

## Revendications

1. Boîte à butées d'une vanne (1) à obturateur (6) comprenant un corps de vanne (2), et une tige de commande (3) de l'obturateur (6) ayant une partie filetée (4), et une extrémité (5) débouchant dans le corps de vanne (2) et solidaire de l'obturateur (6) localisé dans le corps de vanne (2), la tige de commande (3) étant bloquée en rotation autour de son axe (11), ladite boîte à butées comprenant un carter (8), un écrou-centreur (9) localisé dans le carter (8) et solidaire des moyens d'actionnement (21) de la vanne (1), coopérant avec la partie filetée (4) de la tige de commande (3), et au moins deux butées à billes (10) montées entre l'écrou-centreur (9) et le carter (8), bloquant l'écrou-centreur (9) par rapport au carter (8) en translation suivant l'axe (11) de la tige de commande (3), **caractérisée en ce qu'**elle comprend en outre un capteur intégré d'effort (12) en traction et/ou en compression entre chaque butée à billes (10) et le carter (8) pour capter les efforts de la tige de commande (3) lors respectivement des phases d'ouverture et de fermeture de la vanne (1) à obturateur (6) en fonctionnement de service.

2. Boîte à butées selon la revendication 1 **caractérisée en ce qu'**elle comprend en outre un capteur intégré (16) de couple appliqué sur la vanne (1) à obturateur (6) lors des phases d'ouverture et/ou de fermeture de la vanne (1) à obturateur (6) en fonctionnement de service.

3. Boîte à butées selon la revendication 1 ou 2 **caractérisée en ce que**, les capteurs (12, 16)étant reliés à des prises de mesure extérieures (13) par l'intermédiaire de moyens de connexion (14), elle comprend des moyens (15) pour la protection et l'agencement des moyens de connexion (14) dans le carter (8).

4. Boîte à butées selon l'une quelconque des revendications 1 à 3 **caractérisée en ce que** le capteur intégré (12) d'effort en traction et/ou en compression comprend deux couronnes (17) concentriques de même axe (11) que la tige de commande (3), reliée entre elles par des bras de mesure radiaux (18) sur lesquels sont montées des jauges de contrainte ou équivalent, l'une des couronnes (17) portant sur un épaulement annulaire (27) du carter (8), l'autre des couronnes (17) portant sur la butée à billes (10).

5. Boîte à butées selon l'une quelconque des revendications 2 à 4 **caractérisée en ce que** le capteur intégré de couple (16) comprend deux couronnes concentriques (19) de même axe (11) que la tige de commande (3), reliées entre elles par un anneau de mesure (20) sur lequel sont montées des jauges de contrainte ou équivalent, l'une des couronnes (19) étant solidaire du carter (8), l'autre des couronnes (19) étant solidaire d'une partie fixe des moyens d'actionnement (21) de la vanne (1).

6. Boîte à butées selon l'une quelconque des revendications 3 à 5 **caractérisée en ce que** chaque prise de mesure (13) est localisée sur le carter (8) en regard d'un capteur(12, 16), les moyens (15) pour la protection et l'agencement des moyens de connexion (14) comprenant des gaines rigides ou équivalent, solidaires des prises de mesure (13), entourant les moyens de connexion (14) entre les prises de mesure (13) et les capteurs (12, 16).

7. Vanne à obturateur comprenant un corps de vanne (2), une boîte à butées (7), et une tige de commande (3) de l'obturateur (6) ayant une partie filetée, et une extrémité (5) débouchant dans le corps de vanne (2) et solidaire de l'obturateur (6) localisé dans le corps de vanne (2), la tige de commande (3) étant bloquée en rotation autour de son axe (11), **caractérisée en ce qu'**elle comprend une boîte à butées (7) selon l'une quelconque des revendications 1 à 9.

8. Vanne à obturateur selon la revendication 7 **caractérisée en ce que** les moyens d'actionnement (21) de la vanne sont un servomoteur.

9. Vanne à obturateur selon la revendication 7 ou 8 **caractérisée en ce que**, en fonctionnement de service de la vanne, les capteurs d'effort (12) et de couple (16) sont connectés en continu à un dispositif (22) d'acquisition de mesure à période d'échantillonnage variable.

10. Vanne à obturateur selon la revendication 7 ou 8 **caractérisée en ce que**, en fonctionnement de service de la vanne, les capteurs d'effort (12) et de couple (16) sont connectés en continu à un dispositif d'asservissement en position de la tige de commande de la vanne.

11. Procédé d'étalonnage de capteurs d'effort dans une vanne à obturateur selon l'une quelconque des revendications 7 à 10, **caractérisé en ce que** :
- on lie la tige de commande (3) de la vanne (1) en translation axiale avec les moyens d'actionnement par l'intermédiaire d'un élément de tige (81) pourvu d'un capteur d'effort de référence (80);
- on actionne les moyens d'actionnement (21) de la vanne (1) en ouverture ou en fermeture;
- on étalonne les capteurs d'effort intégrés (12) par comparaison avec l'effort mesuré sur le capteur de référence (80) monté sur l'élément de tige (81);
- on libère en translation axiale la tige de commande (3) de la vanne (1) des moyens d'actionnement (21).

## Patentansprüche

1. Anschlagkammer eines Ventils (1) mit Absperrorgan (6), das einen Ventilkörper (2) sowie eine Betätigungsstange (3) für das Absperrorgan (6), die einen gewindeten Bereich (4) hat, und ein Ende (5) umfasst, das in den Ventilkörper (2) mündet und fest mit dem in dem Körper des Ventils (2) angeordneten Absperrorgan (6) verbunden ist, wobei die Betätigungsstange (3) in Drehung um ihre Achse (11) blockiert ist, welche Anschlagkammer ein Gehäuse (8), eine Zentriermutter (9), die in dem Gehäuse (8) angeordnet und fest mit den Antriebsvorrichtungen (21) des Ventils (1) verbunden ist und mit dem gewindeten Bereich (4) der Betätigungsstange (3) zusammenwirkt, und mindestens zwei Kugelanschläge (10) umfasst, die zwischen der Zentriermutter (9) und dem Gehäuse (8) angeordnet sind und die Zentriermutter (9) bezogen auf das Gehäuse (8) in ihrer Translationsbewegung entlang der Achse (11) der Betätigungsstange (3) blockieren, **dadurch gekennzeichnet, dass** sie ferner einen integrierten Messaufnehmer (12) für die Zug- und/oder Kompressionskraft zwischen jedem Kugelanschlag (10) und dem Gehäuse (8) zum Messen der Kräfte der Betätigungsstange (3) jeweils während der Öffnung- bzw. Schließphase des Ventils (1) mit Absperrorgan (6) im Betrieb umfasst.

2. Anschlagkammer nach Anspruch 1, **dadurch gekennzeichnet, dass** sie ferner einen integrierten Messaufnehmer (16) für das auf das Ventil (1) mit Absperrorgan (6) während der Öffnungs- und/oder Schließphase des Ventils (1) mit Absperrorgan (6) im Betrieb ausgeübte Moment umfasst.

3. Anschlagkammer nach Anspruch 1 oder 2, **dadurch gekennzeichnet, dass** sie, nachdem die Messaufnehmer (12, 16) über Verbindungsmittel (14) mit äußeren Messabnahmestellen (13) verbunden sind, Mittel (15) zum Schutz und zur Anordnung der Verbindungsmittel (14) in dem Gehäuse (8) umfasst.

4. Anschlagkammer nach einem der Ansprüche 1 bis 3, **dadurch gekennzeichnet, dass** der integrierte Messaufnehmer (12) für die Zug- und/oder Kompressionskraft zwei konzentrische Einfassungen (17) mit gleicher Achse (11) wie die Betätigungsstange (3) umfasst, die miteinander über radiale Messarme (8) verbunden sind, an die Dehnungsmessgeräte o.ä. montiert sind, wobei eine der Einfassungen (17) auf einem ringförmigen Absatz (27) des Gehäuses (8) und die andere der Einfassungen (17) auf dem Kugelanschlag (10) aufliegt.

5. Anschlagkammer nach einem der Ansprüche 2 bis 4, **dadurch gekennzeichnet, dass** der integrierte Moment-Messaufnehmer (16) zwei konzentrische Einfassungen (19) mit gleicher Achse (11) wie die Betätigungsstange (3) umfasst, die miteinander über einen Messring (20) verbunden sind, an den Dehnungsmessgeräte o.ä. montiert sind, wobei eine der Einfassungen (19) fest mit dem Gehäuse (8) und die andere der Einfassungen (19) fest mit einem unbeweglichen Teil der Antriebsvorrichtungen (21) für das Ventil (1) verbunden ist.

6. Anschlagkammer nach einem der Ansprüche 3 bis 5, **dadurch gekennzeichnet, dass** jede Messstelle (13) am Gehäuse (8) gegenüber einem Messaufnehmer (12, 16) angeordnet ist, wobei die Mittel (15) zum Schutz und zur Anordnung der Verbindungsmittel (14) starre Hülsen o.ä. umfassen, die fest mit den Messstellen (13) verbunden sind und die Verbindungsmittel (14) zwischen den Messstellen (13) und den Messaufnehmern (12, 16) umgeben.

7. Ventil mit Absperrorgan, das einen Ventilkörper (2), eine Anschlagkammer (7) und eine Betätigungsstange (3) für das Absperrorgan (6) mit einem gewindeten Bereich sowie ein Ende (5) umfasst, das in den Ventilkörper (2) mündet und fest mit dem in dem Körper des Ventils (2) angeordneten Absperrorgan (6) verbunden ist, wobei die Betätigungsstange (3) in Drehung um ihre Achse (11) blockiert ist, **dadurch gekennzeichnet, dass** es eine Anschlagkammer (7) nach einem der Ansprüche 1 bis 9 umfasst.

8. Ventil mit Absperrorgan nach Anspruch 7, **dadurch gekennzeichnet, dass** die Antriebsmittel (21) des Ventils aus einem Servomotor bestehen.

9. Ventil mit Absperrorgan nach Anspruch 7 oder 8, **dadurch gekennzeichnet, dass** beim Betrieb des Ventils der Kraftaufnehmer (12) und der Momentaufnehmer (16) kontinuierlich an eine Vorrichtung (22) zur Messerfassung mit variablen Messperioden angeschlossen sind.

10. Ventil mit Absperrorgan nach Anspruch 7 oder 8, **dadurch gekennzeichnet, dass** im laufenden Betrieb des Ventils der Kraftaufnehmer (12) und der Momentaufnehmer (16) kontinuierlich an eine Vorrichtung zur Positionssteuerung der Betätigungsstange des Ventils angeschlossen sind.

11. Verfahren zum Kalibrieren von Kraftaufnehmern in einem Ventil mit Absperrorgan nach einem der Ansprüche 7 bis 10, **dadurch gekennzeichnet, dass**:
- die Betätigungsstange (3) des Ventils (1) in der axialen Translationsbewegung an die Antriebsvorrichtungen mittels eines Stangenelements (81) gekoppelt wird, das mit einem Referenz-Kraftaufnehmer (80) versehen ist;
- die Antriebsvorrichtungen (21) des Ventils (1) auf- oder zugesteuert werden;

## Claims

1. Bearing box for a gate valve (1) with gate (6), comprising a valve body (2) and a stem (3) for operating the gate (6) having a threaded part (4) and an end (5) opening into the valve body (2) and secured to the gate (6) located in the valve body (2), the operating stem (3) being prevented from rotating about its axis (11), the said bearing box comprising a casing (8), a centring nut (9) located in the casing (8) and secured to the means (21) of actuation of the valve (1), collaborating with the threaded part (4) of the operating stem (3) and at least two thrust ball bearings (10) mounted between the centring nut (9) and the casing (8), immobilizing the centring nut (9) with respect to the casing (8) in terms of translation on the axis (11) of the operating stem (3), **characterized in that** this bearing box further comprises a built-in load sensor (12) for tensile and/or compressive load between each thrust ball bearing (10) and the casing (8) to sense the loads in the operating stem (3) during the phases of opening and closing of the gate (6) valve (1) in service operation.

2. Bearing box according to Claim 1, **characterized in that** it further comprises a built-in torque sensor (16) for the torque applied to the gate (6) valve (1) during phases of opening and/or closing of the gate (6) valve (1) in service operation.

3. Bearing box according to Claim 1 or 2, **characterized in that** with the sensors (12, 16) connected to external measurement tappings (13) by connecting means (14), it comprises means (15) for protecting and arranging the connecting means (14) in the casing (8).

4. Bearing box according to any one of Claims 1 to 3, **characterized in that** the built-in load sensor (12) for tensile and/or compressive load, comprises two concentric rings (17) with the same axis (11) as the operating stem (3), which are connected together by radial measurement arms (18) on which strain gauges or the equivalent are mounted, one of the rings (17) bearing against an annular shoulder (27) of the casing (8), the other of the rings (17) bearing against the thrust ball bearing (10).

5. Bearing box according to any one of Claims 2 to 4, **characterized in that** the build-in torque sensor (16) comprises two concentric rings (19) with the same axis (11) as the operating stem (3), the rings being connected together by a measurement annulus (20) on which strain gauges or the equivalent are mounted, one of the rings (19) being secured to the casing (8), the other of the rings (19) being secured to a fixed part of the means (21) of actuation of the valve (1).

6. Bearing box according to any one of Claims 3 to 5, **characterized in that** each measurement tapping (13) is located on the casing (8) facing a sensor (12, 16), the means (15) for protecting and arranging the connecting means (14) comprising rigid sheets or the equivalent, secured to the measurement tappings (13), surrounding the means (14) of connection between the measurement tappings (13) and the sensors (12, 16).

7. Gate valve comprising a valve body (2), a bearing box (7), and a stem (3) for operating the gate (6) having a threaded part, and an end (5) opening into the valve body (2) and secured to the gate (6) located in the valve body (2), the operating stem (3) being prevented from turning about its axis (11), **characterized in that** it comprises a bearing box (7) according to any one of Claims 1 to 9.

8. Gate valve according to Claim 7, **characterized in that** the means (21) of actuation of the valve are a servomotor.

9. Gate valve according to Claim 7 or 8, **characterized in that**, when the valve is in service operation, the load (12) and torque (16) sensors are continuously connected to a measurement acquisition device (22) with a variable sampling rate.

10. Gate valve according to Claim 7 or 8, **characterized in that**, when the valve is in service operation, the load (12) and torque (16) sensors are continuously connected to a device with positional feed back control of the valve operating stem.

11. Method of calibrating load sensors in a gate valve according to any one of Claims 7 to 10, **characterized in that**:
- the stem (3) for operating the valve (1) is connected in terms of axial translation to the actuating means via a stem element (81) provided with a reference load sensor (80);
- the means (21) of actuation of the valve (1) are actuated to cause opening or closing;
- the built-in load sensors (12) are calibrated by comparison with the load measured on the reference sensor (80) mounted on the stem element (81);
- the stem (3) for operating the valve (1) is freed from the means of actuation (21) in terms of axial translation.
